# EUROPEAN PATENT SPECIFICATION

(11) **EP 1 758 113 B1**
(45) Date of publication and mention of the grant of the patent: **06.08.2008**
(21) Application number: 05388068.8
(22) Date of filing: 25.08.2005
(51) Int. Cl.: G11B 20/00, G11B 23/28, G06F 1/00, G06F 21/00

(54) **A copy-protected optical information carrier**
Kopiergeschützter optischer Informationsträger
Support d'information optique protégé contre la copie

(43) Date of publication of application: 28.02.2007
(73) Proprietor: Elling Innovative Group AS, 1375 Billingstad (NO)
(72) Inventor: ELLINGSEN Tom, 1473 Skaarer (NO)
(74) Representative: Raffnsoee, Knud Rosenstand

(56) References cited:
- WO-A-98/41979
- DE-A1- 10 261 045
- US-A1- 2003 223 348
- US-A1- 2004 223 428
- US-A1- 2005 015 607

## Description

The present invention relates to protection of optical information carriers, in particular CD- and CD-ROM-disks against unauthorized copying of the information content stored in the information or data structures of such an information carrier with the aim of limiting lawful use of said information to a single reproduction device such as a computer device, in particular a personal computer.

### Background art

Optical information carriers in the form of CD- or CD-ROM disks have become a very popular and widely used storage medium for various types of information including music, computer software products, computer games etc.

In regular and lawful trade the information content on a CD-ROM disk is intended for use by a single user only, but misappropriation of the information content by unauthorized copying has become a major problem both at a smaller scale in the form of non-profit private use and at larger scale in the form of actual piracy traffic for commercial purposes.

Irrespective of the nature of the copying traffic, copying and piracy problems have resulted in huge economic losses for the music and computer software industry.

In order to combat piracy software producers have developed and implemented a number of different approaches including encryption of information, special data formatting, complex installation procedures and use of passwords to mention just a few. Thus, a customary approach to protection has been to incorporate a computer readable identification code onto the information carrier and supply the same code in accessible form to the purchaser in the course of a regular and lawful sales transaction, whereby a computer loaded with the information carrier thus protected will only be enabled to read the stored information content after entry of the identification code by user operation. Evidently, the protection offered by this concept is unsatisfactory in the sense that repeated use of the identification code supplied as part of the sales transaction by the purchasing user as well as other users related to him cannot be prevented.

Moreover, various relatively simple programmes enabling direct copying of the content of a CD-ROM disk, even if protected by an identification code, can be downloaded from the Internet. Copying software of this type simply localizes the code stored on the DC-ROM and generates the control data needed to enable the computer for reading the full information content thereon.

Another problem involved in the use of prior art anti-piracy approaches has been a wide-spread resistance of end users to these schemes due to restrictions or limitations imposed on otherwise acceptable use of the information carrier, such limitations typically including an inability to "test before buying", restrictions on the generation of legitimate back-up copies and the failure of password protection once the password or identification code has been divulged or discovered. The failure of copy protection concepts to gain end user acceptance has been seen as such a serious problem that industry and commerce have in many cases abandoned protection efforts and chosen to rely on customer integrity to abide by copyright laws.

In an attempt to provide a solution to these problems a copy protection method has been disclosed in International Patent Application WO 98/41979, which is generally based on a purposeful modifycation of the accessibility of encoded information on an optical storage medium. Among various suggested implementations of this concept one embodiment is directed to modification of the optical storage medium by provision of a device, which purposefully damages the optical medium, when the information content thereon is initially accessed, whereby upon subsequent attempts of information accessing the previous access can be detected by purposeful generation of detection errors. The device used for damaging the optical storage medium may be in the form of a ribcord attached to the storage medium, which in the course of an initial use must be manually detached by the user to implement the intentional damage to the information carrier in the form of a physical change such as a detection error profile in a predetermined location on the optical disk for preventing future illegal copying.

In this prior art solution the intentional damage to the information carrier caused by detachment of the damaging device, which is carried out by removal of the information carrier such as a CD from the corresponding drive of the computer, is subjected to a detection procedure in the computer after reinsertion of the information carrier in the corresponding drive. If the detection is positive the computer generates an identification code in the form a configuration fingerprint including data specific to the actual computer and the actual information carrier, such as serial numbers of a vital computer component and the information carrier. This identification code is outputted to the user by display and/or printing and the user is invited to manually write the identification code on the information carrier. The user is then instructed to manually input the identification code to the computer for comparison with the identification code generated by and stored in the computer, whereby completion of the software installation is enabled only, if a match is found between the code inputted by the user and the code stored in the computer.

Evidently, the procedural requirements as outlined above imply an inconvenient complication and drawback of this prior art solution with respect to structuring of the control or installation data to be stored on the information carrier as well as the time needed for the initial installation procedure.

This complication and drawback is avoided by a copy protection concept for optical information carrier disclosed in the applicant's international patent application WO 03/52562 by detachment of a security member bonded to a part of the information or data carrying structures of a compact disk storing control data needed for enabling the computer device to complete reading and storing on the information on the disk. By entry into the computer device of a unique secret identification code carried by the security member the computer device is enabled to resume and complete the reading and storing operations, whereas subsequent attempts of reading and storing of the information with a different computer device will fail due to the unavailability of the control data modified by detachment of the security member. Thereby use of a protected optical information carrier such as a CD ROM is limited to reading and storing of its content in a single computer device. The simplification provided by this concept is accompanied by the limitation, however, that the modification of the control data is effected only by detachment of a physical security member, which must in addition allow incorporation of the identification code in an initially concealed way as well as disclosure of the identification code to the user after detachment of the security member,

### Summary of the invention

On the background outlined above, it is the object of the present invention to provide a relatively simple, uncomplicated and inexpensive solution to the protection of optical information carriers of the kind set forth against illegitimate copying, by which the shortcomings and drawbacks of prior art solutions are avoided or at least significantly reduced without introducing undesirable restraints with respect to the physical form of a detachable security member. Thereby, legitimate use of the information carrier is restricted to a single computer, while still allowing repeated replay of the information carrier on that computer as well generation of a back-up copy, but preventing subsequent misappropriation.

By the invention, an optical information carrier is provided, which comprises the features stated in the pre-characterizing part of claim 1. The combination of these features corresponds to the prior art solution disclosed in WO 98/41979.

To accomplish the object as stated above such an information carrier is characterized, according to the invention by the features stated in the characterizing part of claim 1.

By confining the detection of the intentional physical modification of the information carrying layer to detection of affected readability of at least one specific software component with a specific localization in the information and data carrying structures of the information carrier an improved safeguarding against circumvention of the copy protection is provided together with a true verification of use of the genuine original copy-protected medium for each replay operation performed after the intentional physical modification.

Contrary to prior art concepts, by which the intentional modification of the information and data carrying structures is made by opto-chemical means without use of a detachable security member, as disclosed in EP 1 025 560 B1, the copy-protection concept of the invention can be implemented with very few changes to the state of the art process technology for the making of optical information carriers such as compact disks.

In the implementation of the concept of the invention the specific software component, which is identified by the unique identification code, and to the readability of which the detection procedure in the computer device is targeted, will typically comprise a range of bytes stored in a specific sector of the information and data carrying structures of the information carrier. If as result of the detection an indication of a read error, such as ERROR_CRC or ERROR_INVALID_FUNCTION, is obtained this will serve as a verification of appropriate execution of the intentional physical modification.

In a preferred embodiment the identification code is stored in the specific software component, the readability of which is affected by the intentional physical modification of the information-carrying layer, whereby the identification code will no longer be available after execution of the physical modification.

Whereas the concept of the invention is equally not bound to any specific form of the modification means incorporated in the information carrier for execution of the intentional physical modification and may be of benefit also to implementation of the physical modification by modification means integrated in the information carrying layer of the information carrier, such as opto-chemical means as described above, preferred embodiments of the invention makes use of modification means comprising at least one detachable security element bonded to a part of the information carrying layer, in which said one software component is stored by a bond causing said physical modification by detachment of the security element.

In a particularly simple and advantageous embodiment of this kind the security element comprises said part of the information carrying layer and is detachable by scraping. Thereby, the corresponding part of the information-carrying layer will be removed from the information carrier, leaving a hole in the layer at the location of the software component or components specified by the identification code.

Obviously, the detachment of the security element by scraping will be effected by physical removal of the CD-ROM disk from the computer CD-DOM drive in response to an invitation displayed to the user by the computer. As the part of the information carrying layer removed by detachment of the security element will comprise at least a part of the installation software for the CD-ROM disk, the detachment of the security element will effectively prevent use or replay of the protected disk with any other computer than the one, on which the initial reading of the disk has taken place.

Upon reinsertion of the information carrier in the computer drive the computer will be prompted to undertake detection of readability of the specific software component removed by detachment of the security element. This detection procedure is controlled by the unique identification code, which has been transferred to the computer either from the information carrier itself before removal of the information carrier from the drive or by a user operated entry, while the information carrier is removed for detachment of the security element.

Only if this detection procedure results in identification of a read error in the specific location on the CD-ROM identified by the identification code will the computer be prompted to complete reading of all software components stored on the information carrier.

According to a further preferred embodiment a duplicate of the identification code may be stored on the optical information carrier outside said at least one software component to allow repeated reading of the optical information carrier on said computer device after said physical modification by comparing said duplicate with the identification code stored in the computer device.

In the alternative replay of a protected information carrier on a computer device a limited number of times may be allowed by a further development of the above-mentioned embodiment employing a detachable security element as modification means. According to the alternative embodiment the modification means may comprise a number of detachable security elements bonded to individual parts of the information carrying layer, each storing a specific software component, said individual parts of the information carrying layer being designated by individual identification codes for limitation of the number of times the information carrier can be replayed on the computer device by detachments of said security elements in consecutive order.

To facilitate user operation of this alternative embodiment the number of security elements on the information carrier may be visibly numbered in said consecutive order.

### Brief description of the drawings

In the following the invention will be further explained with reference to the accompanying drawings, on which
fig. 1 is an enlarged cross-sectional view of a fragment of an optical information carrier in the form of a conventional CD-ROM disk;
figs. 2 and 3 are simplified schematic illustrations of the operation principle by reading of an information carrier as shown in fig. 1 by a conventional optical reading system such as the CD-ROM drive of a computer device;
figs. 4 and 5 shows an embodiment of a copy-protected optical information carrier according to the invention in a plan view and an enlarged fragmentary cross-sectional view, respectively;
Fig. 6 is an enlarged fragmentary cross-sectional view of the embodiment in fig. 5 after detachment of a detachable security element;
fig. 7 is an illustration corresponding to the illustrations in figs. 2 and 3 of the operation principle by detection of an intentional modification of information and data carrying structures of the information carrier shown in figs. 4 and 5; and
figs. 8 to 11 are flow diagrams illustrating various alternative modes of operation of an information carrier as shown in figs. 4 and 5.

### Detailed description

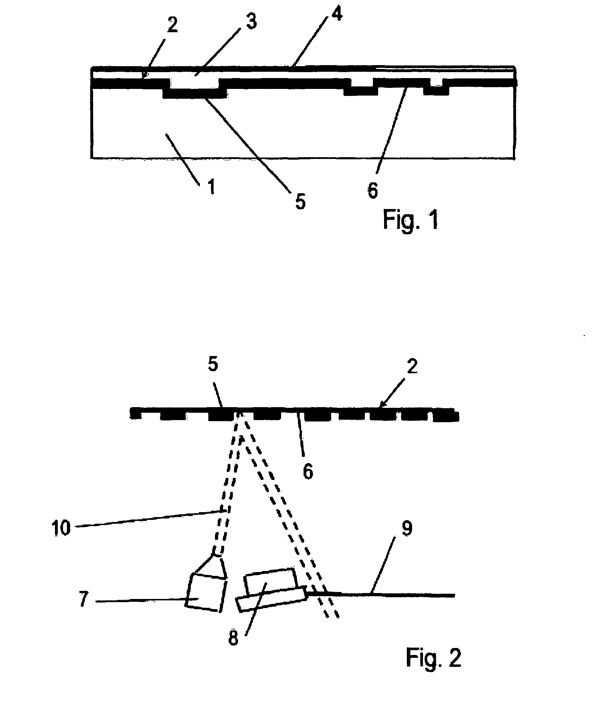

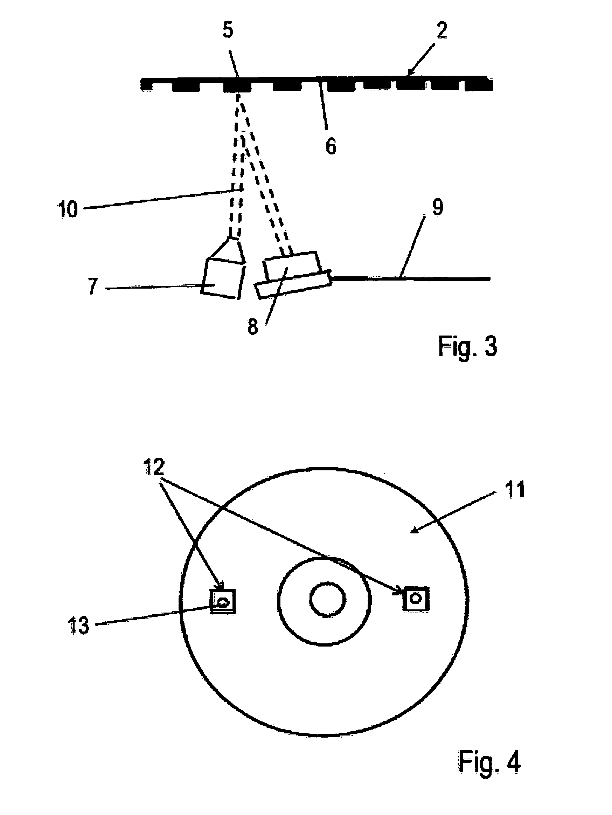

As shown in figs. 1 and 4 an optical information carrier such as a conventional relatively thin CD-ROM disk 1 is typically composed of a circular plate-shaped substrate member 1 of a transparent, relatively rigid plastic material such as polycarbonate serving as the supporting basis structure of the disk and forming one external surface thereof.

On one side of the substrate member 1 a relatively thin information-carrying layer 2 is applied to the substrate member. The information carrying layer 2 is covered on the opposite side with respect to the substrate member 1 by a protective layer 3 such as an acrylic lacquer layer forming the other external side of the disk, to which a label 4 will normally be affixed for identification and information purposes.

The information carrying layer 2 is a reflective layer such as metallic layer, e.g. of aluminium, in which a plurality of information and data carrying structures in the form of so-called lands 5 and pits 6 are formed along a single spiral track extending from the circumference of the disk towards its center, at which a hole is provided for engagement with the rotating drive mechanism of a reading system such as the CD-ROM drive of a conventional computer device.

As known in the art the mutual separation of neighbouring windings in the spiral track providing the information and data carrying structures may be down to approximately .6 µm to provide the well-known large storage capability of the CD-ROM disk.

The information and data carrying layer 2, the thickness of which may be about 1 µm may be bonded to the substrate member 3 by a conventional stamping process, by which the pits 6 are pressed into the transparent material of the substrate member 3. Conventionally the level difference of the lands and pits 5 and 6 forming the information and data carrying structures amounts to a quarter wavelength of the interrogating laser beam used for the reading operation as explained below.

During a reading operation as illustrated in fig. 2 and 3 the disk is caused by the CD-ROM drive of a computer device into rotational motion with constant linear velocity, while reading is performed, during radial propagation of the laser light source from the circumference towards the center of the disk, by emission from a laser source 7 of an interrogating beam 10 of laser light focussed at the level of the lands 5 of the reflective layer 2, at which the laser beam 10 is reflected towards a laser sensitive photo detector 8.

To accomplish a constant linear speed of detection, the angular rate of rotation of the disk is increased as the interrogating laser beam travels from the circumference towards the center of the disk 1. The light pulses returned by the reflective layer 2 in response to the impinging interrogation beam 10 are converted into digital data, in which binary digits "1" and "0" may correspond e.g. to light reflected from the lands 5 and the pits 6, respectively, the digital data being communicated via a line 9 to processing devices in the computer.

The information stored in the information and data carrying structures of the reflective layer 2 includes, in addition to utility information relating to the substance of the software application such as a computer game contained on the disk 1, also installation or control data, which is required by the computer device for enabling appropriate conduct of the reading operation and inputting and storing of the digital information generated by conversion of the light or optical information obtained by the reading operation. Thus, during the reading operation the installation or control data must initially be accessed and entered into the computer before meaningful reading and storage of the utility information can be conducted.

Conventionally, the installation or control data may be confined to a subset including at least one sector of the information and data carrying structures in the layer 2 with a predetermined and defined geographical location on the disk 1. The installation and control data will normally be confined to a relatively narrow region 8 the disk 1 having a width of e.g. 6 mm out of the total disk diameter of about 120 mm. The control data may be localized in any predetermined geographical position on the disk.

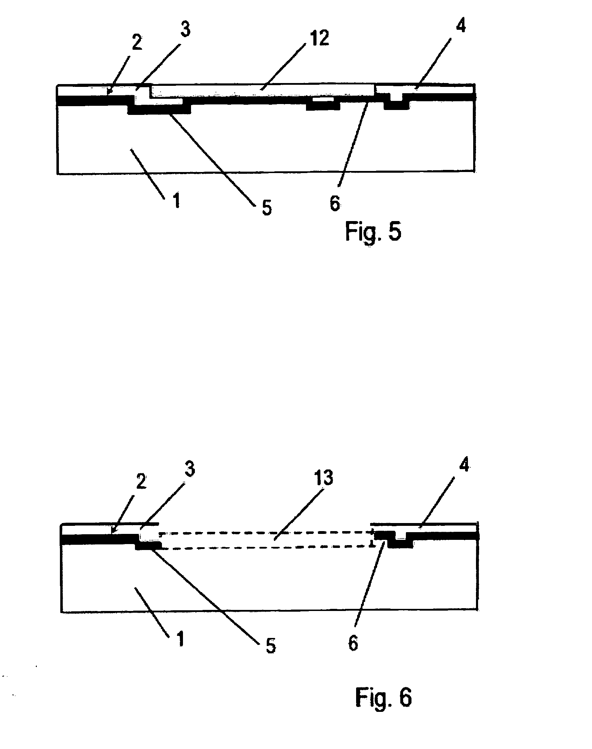

In the preferred embodiment of the copy-protected optical information carrier of present invention shown in figs. 4 and 5 the CD-ROM disk 11 is provided with at least one detachable security member generally designated by 12. In a preferred implementation the security element 12 is a scraping element, which as shown in fig. 6 substitutes a small area of the protective covering layer 3.

In this connection, the protective acrylic layer 3 is preferably applied, in this implementation of the invention, by a printing process such as silk printing to the external surface of the information carrying aluminium layer 2 so as to leave a well-defined small area having a precise localisation on the disk free of the protective layer, said layer having as shown in fig. 4 e.g. the form of a circular dot 13 of a diameter of e.g. 3 mm.

By subsequent application of the scraping element 12 to overlap the area of the aluminium layer 2 not covered by the protective layer 3 the scraping element 12 will thus be bonded directly to the aluminium layer 2 in this area.

The scraping element 12 can be detached from the disk by a conventional scraping technique using any appropriate utensil or tool as conventionally employed to provide disclosure of initially buried or concealed information affixed to an underlying support member.

Thereby a small part of the aluminium layer 2 corresponding to the dot 13 will equally be removed and leave a hole in the layer as an intentional physical modification of the information and data carrying structure thus causing removal of the software component or components stored at the specific geographical disk location of this hole.

Typically, the software component or components thus removed from the information and data carrying structures of the disk will form part of the installation or control data required by a computer for successful complete reading of the information carrier and, thereby, the removal of such software components will prevent subsequent misappropriation of the CD-ROM disk by use on a different computer.

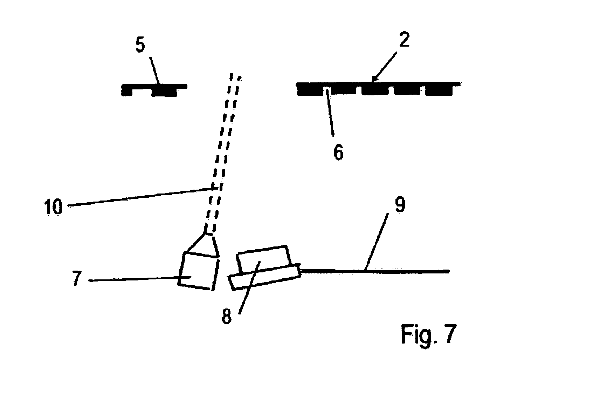

As illustrated in fig. 7 the intentional physical modification of the information and data carrying structures by the removal of the small part 13 of the reflective layer 2 caused by the detachment of the security member 12 will have the effect that no information pulses are reflected towards the detector 8 of the reading system in response to the interrogating laser beam 10. This will be detected by the computer as a read error.

In view of the precise definition and the well-defined localisation of the intentional physical modification it is an essential feature of the invention that the physical modification is designated or identified by a unique identification code, which in connection with replay of the information carrier on a computer device prompts the computer device during reading of the disk to conduct a detection procedure confined to verification of the removal of a software part or component stored in the part 13 of the information carrying layer, which has been removed by detachment of the security element 12.

The detachment of the security element 12 is effected during the first reading of a copy-protected genuine original optical information carrier product.

The installation or control data stored in the information and data carrying structures of the disk are structured or organized to include information, which in connection with the initial reading of the installation or control data for enabling the computer device will cause the computer device to temporarily disable the reading operation, such that the utility information stored on the disk, such as a computer application or entertainment program or a computer game, is not entered into the computer device at this time but an invitation is conveyed to the user to remove the CD-ROM disk from the CD-ROM drive for detachment of the security element.

The installation and control data thus structured form part of the overall information and data content to be stored in the information and data carrying structures of the CD-ROM disk and are stored in the information or data carrying layer 2 during manufacture of the disk.

In a preferred implementation of the invention the identification code designating the localisation of the target for the intentional physical modification of the information carrier is stored on the information carrier itself and retrieved by the computer device during the initial reading of disk before the temporary interruption for detachment of the security element. Typically, the identification code will be stored together with part of the installation and control data in the part of the information-carrying layer to be removed by detachment of the security element. Alternatively, it may be stored, however, in any other convenient part of the information carrier.

As a still further alternative the identification code may be required to be entered into the computer device by user operation during the temporary interruption of the reading of the disk, typically via a keyboard, following previous communication of the code to the user or purchaser of the information carrier by any convenient means of communication.

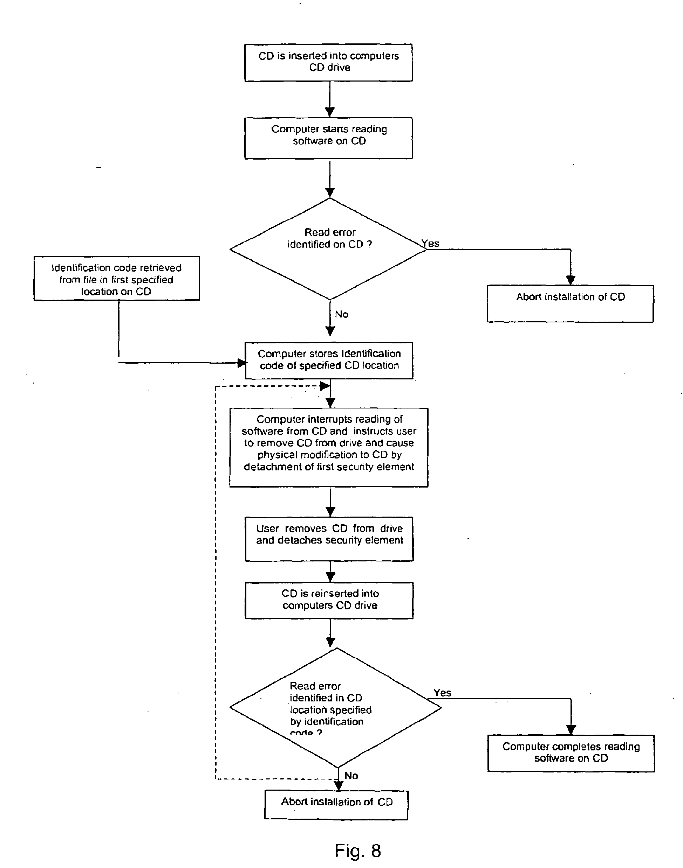

Various modes of operation of a copy-protected optical information carrier according to the invention will appear from the flow diagram shown in figs. 8 to 11.

As illustrated in the flow diagrams the sequence of operations involved in each use of an optical information carrier according to the invention will start with loading of the CD-ROM disk into the CD-ROM drive of the computer device, which will then attempt to read the software including the installation and control data stored on the disk.

At the first installation or replay of a genuine original CD or CD-ROM product, as illustrated by the flow diagram in fig. 8, the computer device will conduct during this initial reading a detection procedure for identification of any read error on the disk. If a read error is found to be present the computer will stop and abort the installation process. If no read error is identified, as would expectedly be the case for a genuine original product, the computer will retrieve the unique identification code designating the localisation of the disk of an intentional physical modification to be subsequently imparted to the disk and will store this identification code.

As prompted by the installation and control data the computer device will now temporarily interrupt the installation process and instruct the user to remove the disk from the CD drive and detach the security element, e.g. by displaying a screen message to the user. Complying with this instruction the user the user will remove the CD and detach the security element as described in the foregoing, thereby causing the intentional physical modification, e.g. in the form of a well-defined hole in the information carrying layer with a well-defined localisation on the disk, e.g. in a specific sector of the information carrying layer.

Having detached the security element the user will reinsert the disk into the CD drive thereby prompting the computer to resume the reading process, during which the computer device will now conduct a detection procedure for identification of the presence of a read error in the localisation identified by the identification code, as described in the foregoing.

Only if the outcome of this detection procedure is positive in the sense that a read error caused by the intentional physical modification of the information-carrying layer is verified, will the computer device complete the reading process.

If no read error is detected this would provide an indication, that the detachment of the security element and the intentional physical modification to be effected thereby has not been properly carried out. In such a case the computer device may, as illustrated by a dotted line in fig. 8 provide the user with the opportunity for one or more additional attempts for detachment of the security member, but will ultimately stop and abort the installation process.

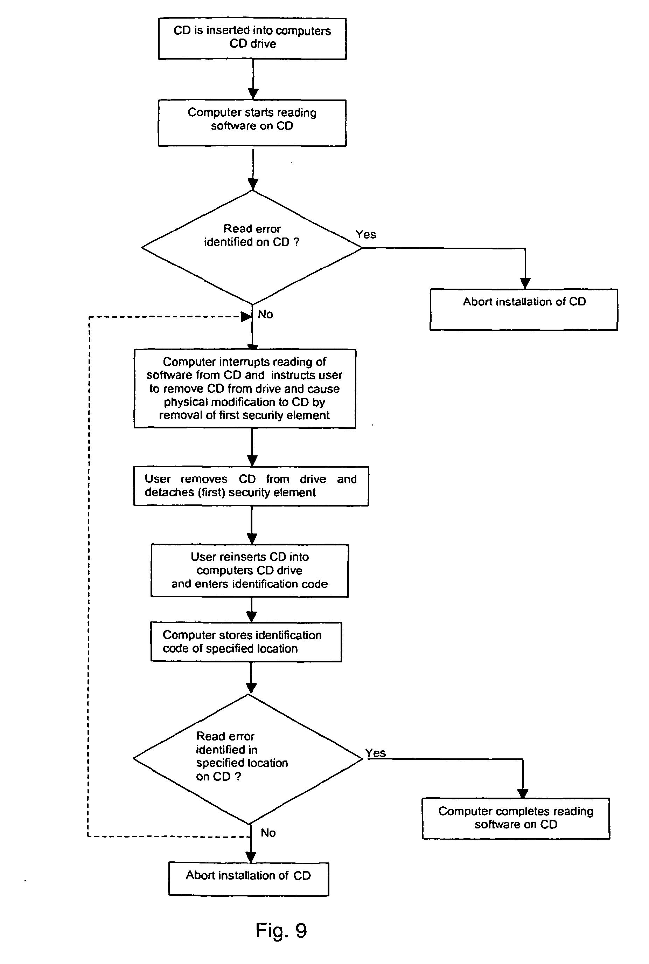

The flow diagram in fig. 9 illustrates an alternative mode of operation for the first installation or replay, by which the identification code is not stored on the disk, but has been communicated to the user either as part of the sales transaction or by way of a separate communication.

In this mode of operation the computer device will instruct the user, following interruption of the initial reading of the installation and control data to enter the identification code after reinsertion of the disk into the CD drive.

In other aspects this alternative mode of operation progresses in the same way as illustrated by the flow diagram in fig. 8.

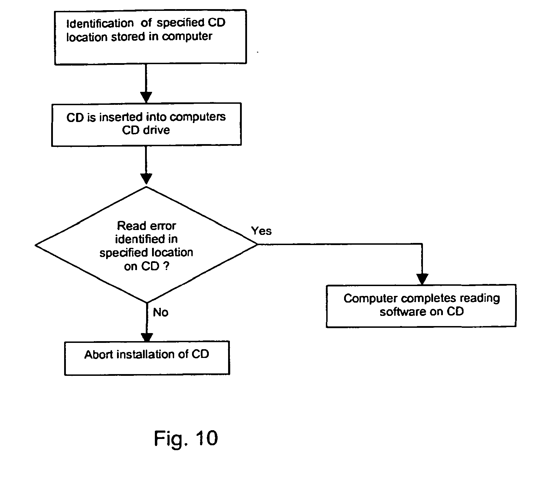

For the mode of operation for the first installation illustrated by the flow diagram in fig. 8, the intentional physical modification effected to the disk will effectively prevent meaningful installation of the optical information carrier on a computer device different from the one used for the first installation. As the identification code has been stored in the computer device during the installation process unlimited replay of the information carrier on the same computer device will be possible as illustrated by the flow diagram in fig. 10, whereby the detection performed by the computer device for identification of the read error caused by the intentional physical modification effected during the first installation will serve as a verification of use of the genuine original copy-protected product.

This verification measure may be further improved by storing a duplicate of the identification code in a localisation on the disk outside the part of the information-carrying layer affected by the intentional physical modification. Repeated replay of the information carrier may then be made conditional upon positive comparison of the duplicate with the identification code that has been stored in the computer device during the first installation of the product.

According to a particular embodiment of the invention the opportunity for replay of a protected optical information carrier on the computer device used for the first installation may be limited, however, to allow replay only a predetermined number of times.

As shown in fig. 4 the information carrier may comprise modification means in the form of a number of discrete detachable security elements bonded, in the way described in the foregoing, to individual parts of the information carrying layer, which are identified by individual identification codes, which may either be stored in different specified locations on the information carrier or communicated to the user as described in the foregoing.

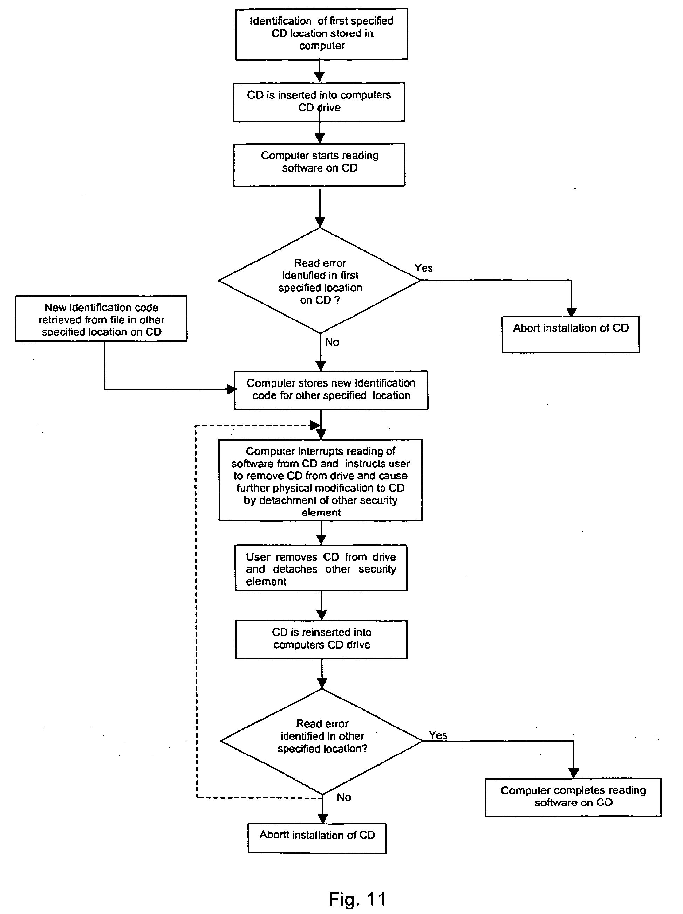

As illustrated by the flow diagram in fig. 11 the mode of operation for replay or reinstallation of the information carrier for this particular embodiment will after identification of the read error caused by the intentional physical modification effected during the first installation prompt the computer device to conduct a detection procedure for any read error in other location on the information carrier.

If no other read error is found the computer device will retrieve a new identification code from a location on the information carrier as specified by the installation and control data and store that identification code, which will identify a target location on the information carrier for a new intentional physical modification to be effected by detachment of another security element.

Thereby the installation procedure for each replay with in the number of replays authorized by the software will progress in the same way as illustrated by the flow diagram in fig. 8.

The number of additional security elements provided on the information carrier in this particular embodiment may typically vary from a single up to ten or even more additional security elements, which will then preferably be visibly numbered according to the consecutive order, in which they are to be detached, in accordance with the consecutive order, in which the computer device applies the corresponding identification codes.

Whereas the invention has been explained in the foregoing by way of various specific embodiments and implementations, the scope of the invention covers also variations, in which the intentional physical modification is made by means other than detachment of a detachable security element within the scope of the following claims.

## Claims

1. An optical information carrier comprising a rigid disk-shaped substrate member (1) of a transparent material,
an information carrying layer (2) applied to one surface of the substrate member (1) and providing on the side thereof facing the substrate member a reflective surface and a plurality of information or data carrying structures (5,6),
software stored in said structures, said software being readable by an optical reading system (7,8) of a computer device adapted to receive the information carrier, and
modification means (12) adapted to cause an intentional irreversible physical modification of the information carrying layer (2), said physical modification affecting the readability of at least one software component stored in said information or data carrying structures,
said software including first code means adapted for being read and executed during the first installation of the software on said computer device and for carrying out the following steps when executed on said computer device:
a first detection step of detecting the occurrence of said physical modification and, by detection of said physical modification during said first detection step, a step of aborting the installation,
by non-detection of the physical modification during said first detection step, a first retrieval step of retrieving an identification code uniquely designating said software component,
a storing step of storing said identification code in said computer device,
a next step of interrupting the reading of the software and requesting to cause said physical modification,
a second detection step of detecting the occurrence of said physical modification, said detection being confined to the software component designated by said identification code,
by non-detection of said physical modification during said second detection step, a step of aborting the installation,
by detection of said physical modification during said second detection step, a step of completing the reading of the software on the optical information carrier,
said software further including second code means adapted for being read and executed during a subsequent reading of the software on the optical information carrier and for carrying out the following steps when executed on said computer device:
a second retrieval step of retrieving said identification code, and
a third detection step of detecting the occurrence of said physical modification, said detection being confined to the software component designated by said identification code,
**characterized in that**
said first retrieval step comprises reading said identification code from said optical information carrier,
said second retrieval step retrieves said identification code from where it was stored by said storing step, and **in that**
said second code means is also adapted to carry out the following steps:
by non-detection of said physical modification during said third detection step, a step of aborting the reading of the software on the optical information carrier and,
by detection of the physical modification during said third detection step, a step of completing the reading of the software on the optical information carrier.

2. An optical information carrier as claimed in claim 1, **characterized in that** the identification code is stored in said at least one software component.

3. An optical information carrier as claimed in claim 2, **characterized in that** a duplicate of the identification code is stored on the optical information carrier outside said at least one software component to allow repeated reading of the optical information carrier on said computer device after said physical modification by comparing said duplicate with the identification code stored in the computer device.

4. An optical information carrier as claimed in any of claims 1 to 3, **characterized in that** said modification means comprises at least one detachable security element (12) bonded to a part of the information carrying layer (2), in which said one software component is stored, by a bond causing said physical modification by detachment of the security element (12).

5. An optical information carrier as claimed in claim 4, **characterized in that** the security element (12) comprises said part of the information carrying layer and is detachable by scraping.

6. An optical information carrier as claimed in claim 5, **characterized in that** an external side of the information carrying layer (2) is covered by a protective layer (3) except on said part of the information carrying layer to allow direct bonding of the scrapable security element (12) to the information carrying layer.

7. An optical information carrier as claimed in claim 6, **characterized in that** said protective layer (3) comprises an acrylic layer applied by a printing process.

8. An optical information carrier as claimed in any of claims 4 to 7, **characterized in that** the modification means comprises a number of detachable security elements (12) bonded to individual parts of the information carrying layer, each storing a specific software component, said individual parts of the information carrying layer being designated by individual identification codes for limitation of the number of times the information carrier can be replayed on the computer device by detachment of said security elements in consecutive order.

9. An optical information carrier as claimed in claim 8, **characterized in that** said number of security elements are visibly numbered in said consecutive order.

## Patentansprüche

1. Optischer Informationsträger, umfassend ein starres, scheibenförmiges Substratglied (1) aus einem transparenten Material,
eine Informationsträgerschicht (2), die an eine Oberfläche bzw. Fläche des Substratglieds (1) angebracht ist und die auf ihrer Seite, die dem Substratglied zugewandt ist, eine reflektierende Oberfläche bzw. Fläche und eine Mehrzahl von Informations- oder Datenträgerstrukturen (5, 6) bereitstellt,
Software, die in den Strukturen gespeichert ist, wobei die Software durch ein optisches Lesesystem (7, 8) einer Computervorrichtung lesbar ist, die angepasst ist, den Informationsträger aufzunehmen, und
Modifikationsmittel (12), die angepasst sind, eine beabsichtigte, irreversible physische bzw. physikalische Modifikation der Informationsträgerschicht (2) zu bewirken, wobei die physikalische Modifikation die Lesbarkeit wenigstens einer Softwarekomponente beeinträchtigt, die in den Informations- oder Datenträgerstrukturen gespeichert ist,
wobei die Software erste Codemittel enthält, die angepasst sind, gelesen und während der ersten Installation der Software auf der Computervorrichtung ausgeführt zu werden und die folgenden Schritte durchzuführen, wenn sie auf der Computervorrichtung ausgeführt werden:
einen ersten Erfassungs- bzw. Detektierschritt des Erfassens bzw. Detektierens des Auftretens der physikalischen Modifikation und, durch Erfassung der physikalische Modifikation während des ersten Erfassungsschritts, einen Schritt des Abbrechens der Installation,
durch Nichterfassung bzw. Nichtdetektierung der physikalischen Modifikation während des ersten Erfassungsschritts, einen ersten Wiedererlangungsschritt des Wiedererlangens eines Identifikationscodes, der die Softwarekomponente eindeutig bezeichnet,
einen Speicherschritt des Speicherns des Identifikationscodes in der Computervorrichtung,
einen nächsten Schritt des Unterbrechens des Lesens der Software und Bittens um Veranlassung der physikalischen Modifikation,
einen zweiten Erfassungs- Detektierschritt des Erfassens bzw. Detektierens des Auftretens der physikalischen Modifikation, wobei die Erfassung auf die Softwarekomponente beschränkt ist, die durch den Identifikationscode bezeichnet ist,
durch Nichterfassung der physikalischen Modifikation während des zweiten Erfassungsschritts, einen Schritt des Abbrechens der Installation,
durch Erfassung der physikalischen Modifikation während des zweiten Erfassungsschritts, einen Schritt des Vervollständigens des Lesens der Software auf dem optischen Informationsträger,
wobei die Software ferner zweite Codemittel enthält, die angepasst sind, gelesen und während eines nachfolgenden Lesens der Software auf dem optischen Informationsträger ausgeführt zu werden und die folgenden Schritte durchzuführen, wenn sie auf der Computervorrichtung ausgeführt werden:
einen zweiten Wiedererlangungsschritt des Wiedererlangens des Identifikationscodes, und
einen dritten Erfassungs- bzw. Detektierschritt des Erfassens bzw. Detektierens des Auftretens der physikalischen Modifikation, wobei die Erfassung auf die Softwarekomponente beschränkt ist, die durch den Identifikationscode bezeichnet ist,
**dadurch gekennzeichnet, dass**
der erste Wiedererlangungsschritt ein Lesen des Identifikationscodes von dem optischen Informationsträger umfasst,
der zweite Wiedererlangungsschritt den Identifikationscode von dort wiedererlangt, wo er durch den Speicherschritt gespeichert wurde, und **dadurch**, dass
das zweite Codemittel auch angepasst ist, die folgenden Schritte durchzuführen:
durch Nichterfassung der physikalischen Modifikation während des dritten Erfassungsschritts, einen Schritt des Abbrechens des Lesens der Software auf dem optischen Informationsträger, und
durch Erfassung der physikalischen Modifikation während des dritten Erfassungsschritts, einen Schritt des Vervollständigens des Lesens der Software auf dem optischen Informationsträger.

2. Optischer Informationsträger nach Anspruch 1, **dadurch gekennzeichnet, dass** der Identifikationscode in der wenigstens einen Softwarekomponente gespeichert ist.

3. Optischer Informationsträger nach Anspruch 2, **dadurch gekennzeichnet, dass** ein Duplikat des Identifikationscodes auf dem optischen Informationsträger außerhalb der wenigstens einen Softwarekomponente gespeichert ist, um ein wiederholtes Lesen des optischen Informationsträgers auf der Computervorrichtung nach der physikalischen Modifikation zu erlauben, indem das Duplikat mit dem in der Computervorrichtung gespeicherten Identifikationscode verglichen wird.

4. Optischer Informationsträger nach einem der Ansprüche 1 bis 3, **dadurch gekennzeichnet, dass** das Modifikationsmittel wenigstens ein abnehmbares bzw. lösbares Sicherheitselement (12) umfasst, das an einen Teil der Informationsträgerschicht (2), in der die Softwarekomponente gespeichert ist, gebondet ist, und zwar durch einen Bond, der die physikalische Modifikation durch Lösen des Sicherheitselements (12) bewirkt.

5. Optischer Informationsträger nach Anspruch 4, **dadurch gekennzeichnet, dass** das Sicherheitselement (12) den Teil der Informationsträgerschicht umfasst und durch Schaben bzw. Kratzen lösbar ist.

6. Optischer Informationsträger nach Anspruch 5, **dadurch gekennzeichnet, dass** eine externe Seite der Informationsträgerschicht (2) durch eine Schutzschicht (3) mit Ausnahme an dem Teil der Informationsträgerschicht bedeckt ist, um ein direktes Bonden des abschabbaren bzw. abkratzbaren Sicherheitselements (12) an die Informationsträgerschicht zu erlauben.

7. Optischer Informationsträger nach Anspruch 6, **dadurch gekennzeichnet, dass** die Schutzschicht (3) eine Acrylschicht umfasst, die durch einen Druckprozess aufgebracht wird.

8. Optischer Informationsträger nach einem der Ansprüche 4 bis 7, **dadurch gekennzeichnet, dass** das Modifikationsmittel eine Anzahl von lösbaren Sicherheitselementen (12) umfasst, die an individuelle Teile der Informationsträgerschicht gebondet sind, die jeweils eine spezifische Softwarekomponente speichern, wobei die individuellen Teile der Informationsträgerschicht durch individuelle Identifikationscodes bezeichnet sind, um die Anzahl von Malen zu begrenzen, die der Informationsträger auf der Computervorrichtung abgespielt werden kann, und zwar durch Lösen der Sicherheitselemente in fortlaufender Reihenfolge.

9. Optischer Informationsträger nach Anspruch 8, **dadurch gekennzeichnet, dass** die Anzahl von Sicherheitselementen in der fortlaufenden Reihenfolge sichtbar numeriert ist.

## Revendications

1. Support d'informations optique comprenant un élément de substrat en forme de disque rigide (1) en matériau transparent,
une couche portant des informations (2) appliquée sur une surface de l'élément de substrat (1) et offrant, sur le côté de celle-ci tourné vers l'élément de substrat, une surface réfléchissante et une pluralité de structures portant des informations ou des données (5, 6),
un logiciel stocké dans lesdites structures, ledit logiciel étant lisible par un système de lecture optique (7, 8) d'un dispositif informatique adapté pour recevoir le support d'informations, et
un moyen de modification (12) adapté pour provoquer une modification physique irréversible de la couche portant des informations (2), ladite modification physique affectant la lisibilité d'au moins un composant logiciel stocké dans lesdites structures portant des informations ou des données,
ledit logiciel comprenant un premier moyen de code adapté pour être lu et exécuté pendant la première installation du logiciel sur ledit dispositif informatique et pour réaliser les étapes suivantes lorsqu'il est exécuté sur ledit dispositif informatique :
une première étape de détection consistant à détecter la survenance de ladite modification physique et, en cas de détection de ladite modification physique pendant ladite première étape de détection, une étape d'annulation de l'installation,
en cas de non-détection de la modification physique pendant ladite première étape de détection, une première étape de recherche consistant à rechercher un code d'identification désignant de manière unique ledit composant logiciel,
une étape de stockage consistant à stocker ledit code d'identification dans ledit dispositif informatique,
une étape suivante d'interruption de la lecture du logiciel et de demande de réalisation de ladite modification physique,
une seconde étape de détection consistant à détecter la survenance de ladite modification physique, ladite détection étant limitée au composant logiciel désigné par ledit code d'identification,
en cas de non-détection de ladite modification physique pendant ladite seconde étape de détection, une étape d'annulation de l'installation,
en cas de détection de ladite modification physique pendant ladite seconde étape de détection, une étape de réalisation de la lecture du logiciel sur le support d'informations optique,
ledit logiciel comprenant en outre un second moyen de code adapté pour être lu et exécuté pendant une lecture ultérieure du logiciel sur le support d'informations optique et pour réaliser les étapes suivantes lorsqu'il est exécuté sur ledit dispositif informatique :
une seconde étape de recherche consistant à rechercher ledit code d'identification, et
une troisième étape de détection consistant à détecter la survenance de ladite modification physique, ladite détection étant limitée au composant logiciel désigné par ledit code d'identification,
**caractérisé en ce que**
ladite première étape de recherche comprend la lecture dudit code d'identification depuis ledit support d'informations optique,
ladite seconde étape de recherche consiste à rechercher ledit code d'identification depuis l'endroit auquel il a été stocké par ladite étape de stockage, et **en ce que**
ledit second moyen de code est également adapté afin de réaliser les étapes suivantes :
en cas de non-détection de ladite modification physique pendant ladite troisième étape de détection, une étape d'annulation de lecture du logiciel sur le support d'informations optique, et
en cas de détection de la modification physique pendant ladite troisième étape de détection, une étape de réalisation de la lecture du logiciel sur le support d'informations optique.

2. Support d'informations optique selon la revendication 1, **caractérisé en ce que** le code d'identification est stocké dans ledit composant logiciel au moins.

3. Support d'informations optique selon la revendication 2, **caractérisé en ce qu'**un double du code d'identification est stocké sur le support d'informations optique à l'extérieur dudit composant logiciel au moins afin de permettre une lecture répétée du support d'informations optique sur ledit dispositif informatique après ladite modification physique en comparant ledit double avec le code d'identification stocké dans le dispositif informatique.

4. Support d'informations optique selon l'une quelconque des revendications 1 à 3, **caractérisé en ce que** ledit moyen de modification comprend au moins un élément de sécurité détachable (12) relié à une partie de la couche portant des informations (2), dans laquelle ledit composant logiciel est stocké, par une liaison provoquant ladite modification physique par le détachement de l'élément de sécurité (12).

5. Support d'informations optique selon la revendication 4, **caractérisé en ce que** l'élément de sécurité (12) comprend ladite partie de la couche portant des informations et est détachable par raclage.

6. Support d'informations optique selon la revendication 5, **caractérisé en ce qu'**un côté externe de la couche portant des informations (2) est recouvert par une couche de protection (3), excepté sur ladite partie de la couche portant des informations, afin de permettre une liaison directe de l'élément de sécurité pouvant être raclé (12) avec la couche portant des informations.

7. Support d'informations optique selon la revendication 6, **caractérisé en ce que** ladite couche de protection (3) comprend une couche d'acrylique appliquée par un processus d'impression.

8. Support d'informations optique selon l'une quelconque des revendications 4 à 7, **caractérisé en ce que** le moyen de modification comprend un certain nombre d'éléments de sécurité détachables (12) reliés à des parties individuelles de la couche portant des informations, stockant chacune un composant logiciel spécifique, lesdites parties individuelles de la couche portant des informations étant désignées par des codes d'identification individuels afin de limiter le nombre de fois où le support d'informations peut être relu sur le dispositif informatique par le détachement desdits éléments de sécurité dans un ordre consécutif.

9. Support d'informations optique selon la revendication 8, **caractérisé en ce que** lesdits éléments de sécurité sont visiblement numérotés dans ledit ordre consécutif.
